# EUROPEAN PATENT APPLICATION

(11) **EP 3 832 617 A1**
(43) Date of publication of application: **09.06.2021**
(21) Application number: 19866490.6
(22) Date of filing: 02.09.2019
(51) Int. Cl.: G08B 21/02, E02F 9/20, E02F 9/26

(54) **OPERATING MACHINE INFORMATION DISPLAY SYSTEM**

(30) Priority: 26.09.2018 JP 2018180441
(71) Applicant: KOBELCO CONSTRUCTION MACHINERY CO., LTD., Hiroshima-shi Hiroshima 731-5161 (JP)
(72) Inventor: KAMIMURA, Yusuke, Hiroshima-shi, Hiroshima 731-5161 (JP); YAMAZAKI, Yoichiro, Hiroshima-shi, Hiroshima 731-5161 (JP)
(74) Representative: TBK
(86) International application number: PCT/JP2019/034399
(87) International publication number: WO 2020/066475

(57) **Abstract**

An operating machine information acquisition unit acquires information on an operating machine, including position information on the operating machine. A terminal device is carried by a worker around the operating machine, capable of displaying information, and includes a terminal device information acquisition unit. The terminal device information acquisition unit acquires position information and orientation information of the terminal device. A calculation unit causes the terminal device to display state information relating to a state of the operating machine based on the position information of the operating machine and the position information and the orientation information of the terminal device.

## Description

### Technical Field

The present invention relates to an operating machine information display system that displays information on operating machines.

### Background Art

For example, Patent Literature 1 and the like describe a technique for displaying information on an operating machine. In the technique described in Patent Literature 1, a slew trajectory of an attachment is drawn on the ground by laser light (see FIG. 9 and the like of Patent Literature 1).

In the technique described in Patent Literature 1, information on an operating machine is drawn on the ground. For this reason, it is necessary to install large equipment such as a laser lamp on the operating machine. Further, depending on the surrounding conditions of the operating machine such as a state of the ground, it may be difficult for a worker to acquire the information drawn on the ground.

### Citation List

### Patent Literature

Patent Literature 1: JP 2009-121053 A

### Summary of Invention

In view of the above, an object of the present invention is to provide an operating machine information display system in which a worker around an operating machine can easily acquire information on the operating machine and equipment required to be provided on the operating machine can be made smaller than before.

The operating machine information display system according to one aspect of the present invention displays information on the operating machine. The operating machine information display system includes an operating machine information acquisition unit, a terminal device, and a calculation unit. The operating machine information acquisition unit acquires information on the operating machine, including position information on the operating machine. The terminal device is carried by the worker around the operating machine, capable of displaying information, and includes a terminal device information acquisition unit. The terminal device information acquisition unit acquires position information and orientation information of the terminal device. The calculation unit causes the terminal device to display state information relating to a state of the operating machine based on the position information of the operating machine acquired by the operating machine information acquisition unit and the position information and the orientation information of the terminal device acquired by the terminal device information acquisition unit.

### Brief Description of Drawings

FIG. 1 is a diagram which shows an operating machine information display system 1.
FIG. 2 is a block diagram of the operating machine information display system 1 shown in FIG. 1.
FIG. 3 is a diagram which shows display of a terminal device 60 shown in FIG. 1.
FIG. 4 is a diagram corresponding to FIG. 3 in a case where the terminal device 60 shown in FIG. 1 exists inside an attention area A shown in FIG. 3.
FIG. 5 is a diagram corresponding to FIG. 3 in a case where a plurality of operating machines 10 shown in FIG. 3 exist.
FIG. 6 is a diagram in a case where the display of the terminal device 60 shown in FIG. 5 is viewed from above.
FIG. 7A is a diagram which shows an example of an attention area A1 in a case where the attention area A1 is set based on a parameter relating to slewing of the operating machine 10 shown in FIG. 1.
FIG. 7B is a diagram corresponding to FIG. 7A in a case where the attention area A1 is set wider than that in the state shown in FIG. 7A.
FIG. 7C is a graph which shows a relationship between a parameter relating to slewing of an upper slewing body 23 shown in FIG. 7A and size of the attention area A1.
FIG. 8A is a diagram which shows an example of an attention area A2 in a case where the attention area A2 is set based on a parameter relating to travelling of the operating machine 10 shown in FIG. 1.
FIG. 8B is a diagram corresponding to FIG. 8A in a case where the attention area A2 is set wider than that in the state shown in FIG. 8A.
FIG. 8C is a graph which shows a relationship between a parameter relating to travelling of the operating machine 10 shown in FIG. 8A and size of the attention area A2.
FIG. 9A is a diagram which shows an example of an attention area A3 in a case where the attention area A3 is set based on an operation amount or speed of an attachment 30 shown in FIG. 1.
FIG. 9B is a diagram corresponding to FIG. 9A in a case where the attention area A3 is set wider than that in the state shown in FIG. 9A.
FIG. 9C is a graph showing a relationship between an operation amount or operating speed of the attachment 30 shown in FIG. 9A and size of the attention area A3.
FIG. 10A is a diagram corresponding to FIG. 7A in a case where an attention area A4 is set wider than that in the state shown in FIG. 7A.
FIG. 10B is a graph which shows a relationship between a reach L4 of the attachment 30 shown in FIG. 10A and size of the attention area A4.
FIG. 11A is a flowchart of a case where a calculation unit 90 shown in FIG. 2 sets the attention area A based on an operation amount of the operating machine 10.
FIG. 11B is a flowchart of a case where the calculation unit 90 shown in FIG. 2 sets the attention area A based on an operating speed of the operating machine 10.
FIG. 11C is a flowchart of a case where the calculation unit 90 shown in FIG. 2 changes display setting of the terminal device 60 according to a condition.

### Description of Embodiments

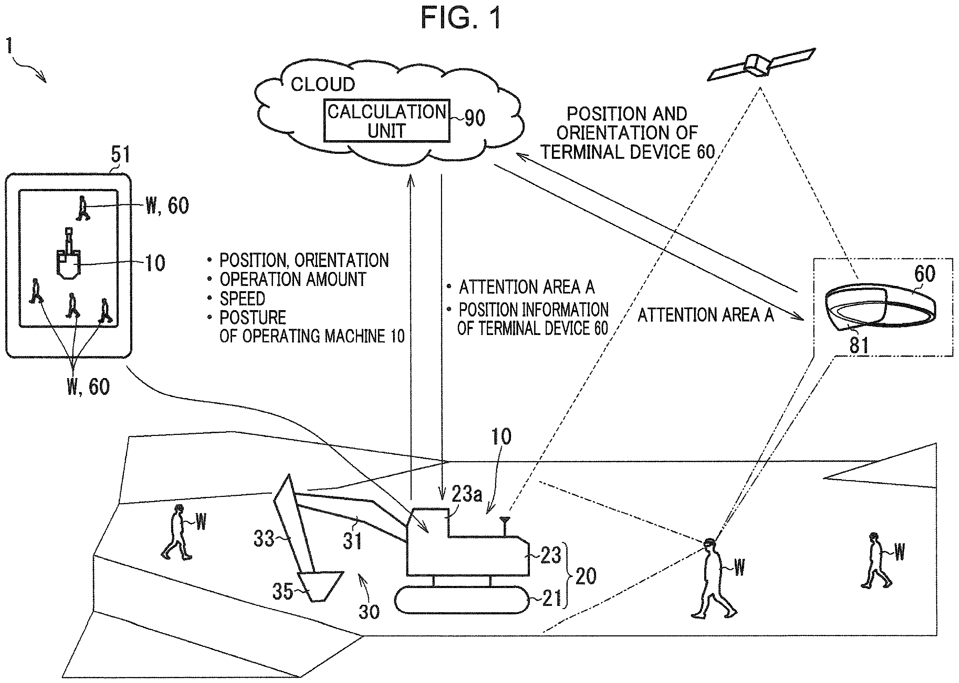

An operating machine information display system 1 will be described with reference to FIGS. 1 to 11C.

The operating machine information display system 1 is a system that notifies (at least displays) information on an operating machine 10 shown in FIG. 1. The operating machine information display system 1 includes the operating machine 10, a terminal device 60, and a calculation unit 90.

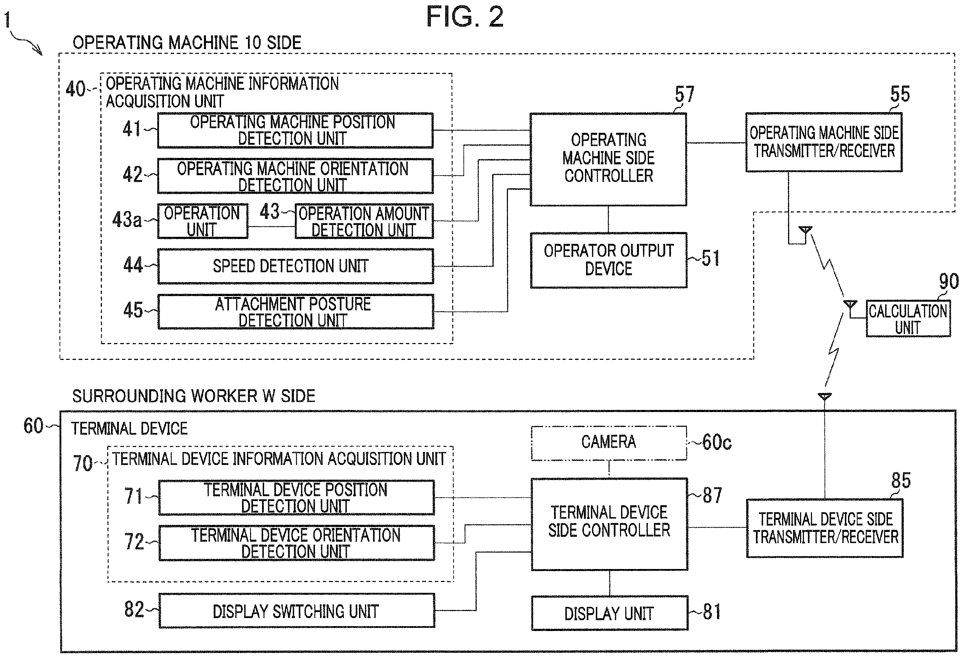

The operating machine 10 is a machine that performs work, for example, a construction machine that performs construction work. The operating machine 10 may be, for example, an excavator, for example, a bulldozer, or the like. The operating machine 10 includes a machine main body 20, an attachment 30, an operating machine information acquisition unit 40 shown in FIG. 2, an operator output device 51, an operating machine side transmitter/receiver 55, and an operating machine side controller 57.

As shown in FIG. 1, the machine main body 20 includes a lower travelling body 21 and an upper slewing body 23. The lower travelling body 21 causes the operating machine 10 to travel. The lower travelling body 21 is, for example, a crawler. The upper slewing body 23 is mounted on the lower travelling body 21 and is slewable with respect to the lower travelling body 21. The upper slewing body 23 includes, for example, an operation room 23a. The attachment 30 is attached to the upper slewing body 23.

The attachment 30 is a device (working device) for performing various kinds of work. The attachment 30 is attached to the machine main body 20 so as to be movable with respect to the machine main body 20. The attachment 30 is attached to, for example, the upper slewing body 23. In a case where the operating machine 10 is an excavator, the attachment 30 includes a boom 31, an arm 33, and a bucket 35. Hereinafter, a case where the operating machine 10 is an excavator will be mainly described. The boom 31 is rotatably attached to the upper slewing body 23. The arm 33 is rotatably attached to the boom 31. The bucket 35 is rotatably attached to the arm 33. The attachment 30 may include, for example, a dozer (soil removal plate) (not shown).

The operating machine information acquisition unit 40 (see FIG. 2) acquires information on the operating machine 10. The operating machine information acquisition unit 40 acquires position information of the operating machine 10, orientation information of the operating machine 10, operation amount information of the operating machine 10, speed information of the operating machine 10, and posture information of the attachment 30. The operating machine information acquisition unit 40 may acquire only a part of these pieces of information. The operating machine information acquisition unit 40 may acquire information regarding a state of the operating machine 10 other than the above. For example, the operating machine information acquisition unit 40 may acquire information on whether or not the operator is in contact with an operation unit 43a (see FIG. 2) for operating the operating machine 10. The information on whether or not the operator is in contact with the operation unit 43a is, for example, information on whether or not an operation lever is gripped. For example, the operating machine information acquisition unit 40 may acquire information on whether or not the operation unit 43a (see FIG. 2) can be operated. The information on whether or not the operation unit 43a can be operated is, for example, information indicating whether or not a lever lock (not shown) is engaged (whether or not a bar which is the lever lock is raised). As shown in FIG. 2, the operating machine information acquisition unit 40 includes an operating machine position detection unit 41, an operating machine orientation detection unit 42, an operation amount detection unit 43, a speed detection unit 44, and an attachment posture detection unit 45. Hereinafter, each constituent of the operating machine information acquisition unit 40 will be described with reference to FIG. 2.

The operating machine position detection unit 41 acquires the position information of the operating machine 10 by detecting the position of the operating machine 10 shown in FIG. 1. The operating machine position detection unit 41 detects the position of the operating machine 10 in a work site (construction site or the like) where the operating machine 10 is used. The operating machine position detection unit 41 is, for example, a position sensor that uses a satellite positioning system. The satellite positioning system is, for example, a global navigation satellite system (GNSS). Alternatively, the operating machine position detection unit 41 may be, for example, an optical surveying instrument. The optical surveying instrument is, for example, an automatic tracking total station. The GNSS and automatic tracking total station are generally used in construction sites and are highly versatile. For this reason, the operating machine information display system 1 can be easily introduced to a construction site.

The operating machine orientation detection unit 42 (see FIG. 2) acquires the orientation information of the operating machine 10 by detecting the orientation of the operating machine 10. The operating machine orientation detection unit 42 detects the orientation of the lower travelling body 21 and the orientation of the upper slewing body 23. The configuration may be such that the operating machine orientation detection unit 42 detects only one of the orientation of the lower travelling body 21 and the orientation of the upper slewing body 23. The operating machine orientation detection unit 42 is, for example, an orientation sensor using a satellite positioning system. Alternatively, the operating machine orientation detection unit 42 may be an orientation sensor using an optical surveying instrument or an orientation sensor using geomagnetism.

The operation amount detection unit 43 (see FIG. 2) acquires the operation amount information of the operating machine 10 by detecting the operation amount of the operating machine 10. The operation amount detection unit 43 may be provided in the operation room 23a of the operating machine 10, or may be provided in a remote control unit (not shown) for remotely controlling the operating machine 10. The operation amount detected by the operation amount detection unit 43 is a slewing operation amount, a travelling operation amount, and an attachment operation amount. The "slewing operation amount" is the operation amount of the operation of slewing the upper slewing body 23 with respect to the lower travelling body 21. The "travelling operation amount" is the operation amount of the operation of causing the operating machine 10 (for example, the lower travelling body 21) to travel. The "attachment operation amount" is an operation amount of the operation of operating the attachment 30. For example, the attachment operation amount includes operation of rotating the boom 31 with respect to the upper slewing body 23 (boom operation), operation of rotating the arm 33 with respect to the boom 31 (arm operation), and operation of rotating the bucket 35 with respect to the arm 33 (bucket operation).

The operation amount detection unit 43 detects the operation of the operation unit 43a (for example, an operation lever, an operation pedal, and the like) for operating the operating machine 10. Specifically, for example, the operation amount detection unit 43 may detect the angle of the operation unit 43a (the angle of the operation lever, the angle of the operation pedal, and the like). For example, in a case where the operation unit 43a outputs a pilot hydraulic pressure according to the operation amount, the operation amount detection unit 43 is a hydraulic sensor that detects the pilot hydraulic pressure. For example, in a case where the operation unit 43a outputs an electric signal corresponding to the operation amount, the operation amount detection unit 43 is a voltage sensor or a current sensor that detects this electric signal.

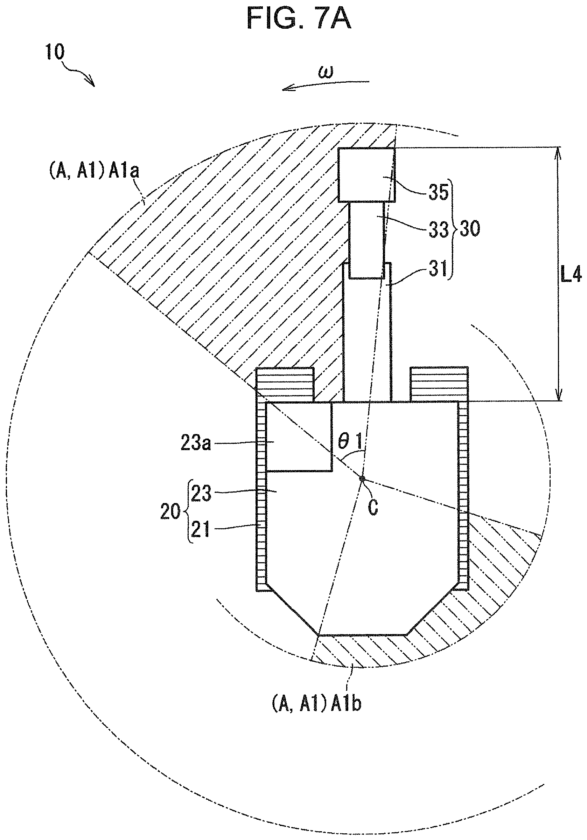

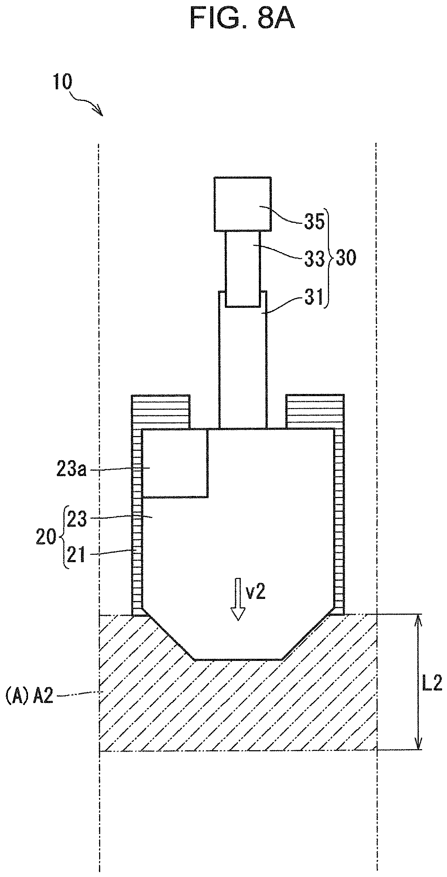

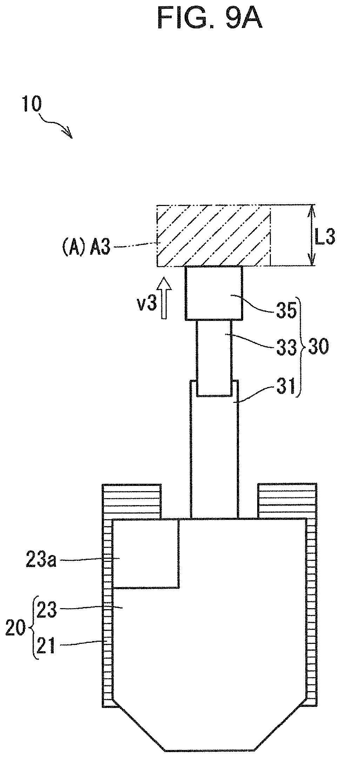

The speed detection unit 44 (see FIG. 2) acquires the speed information of the operating machine 10 by detecting the speed of operation of the operating machine 10. Note that it is the operation amount detection unit 43 that detects the speed of the operating machine 10 from the detection result of the operation amount of the operating machine 10, and is not the speed detection unit 44. The speeds detected by the speed detection unit 44 are a slewing speed ω (see FIG. 7A), a travelling speed v2 (see FIG. 8A), and an attachment speed v3 (see FIG. 9A).

The speed detection unit 44 detects the slewing speed ω (see FIG. 7A) of the upper slewing body 23 with respect to the ground. In this case, the speed detection unit 44 is, for example, a gyro sensor or a speed sensor using a satellite positioning system. The speed detection unit 44 may detect the slewing speed ω of the upper slewing body 23 with respect to the ground based on the slewing speed of the lower travelling body 21 with respect to the ground and the slewing speed of the upper slewing body 23 with respect to the lower travelling body 21.

The speed detection unit 44 detects the travelling speed v2 (see FIG. 8A) of the operating machine 10 with respect to the ground. In this case, the speed detection unit 44 may be, for example, a sensor (specifically, a rotary encoder or the like) that detects the rotation speed of a travelling motor (not shown) that drives the lower travelling body 21, and may be a speed sensor using a satellite positioning system.

The speed detection unit 44 detects the attachment speed v3 (see FIG. 9A), which is the operating speed of the attachment 30 with respect to the machine main body 20 (for example, the upper slewing body 23). The speed detection unit 44 may detect, for example, the speed of a tip portion (for example, the bucket 35) of the attachment 30 or the speed of each constituent (for example, the boom 31, the arm 33, and the bucket 35) of the attachment 30. The speed detection unit 44 may detect the attachment speed v3 by calculating the attachment speed v3 using the angle of each constituent of the attachment 30 detected by the attachment posture detection unit 45.

The attachment posture detection unit 45 acquires the posture information of the attachment 30 by detecting the posture of the attachment 30. Specifically, the attachment posture detection unit 45 detects the angle of the boom 31 with respect to the upper slewing body 23, the angle of the arm 33 with respect to the boom 31, and the angle of the bucket 35 with respect to the arm 33. The attachment posture detection unit 45 is, for example, an angle sensor (specifically, a potentiometer or the like) that detects each of the above angles. Alternatively, the attachment posture detection unit 45 may detect the posture of the attachment 30 by, for example, an inertial measurement unit (IMU).

The operator output device 51 is a device that is configured to be usable by the operator of the operating machine 10 and performs output. The operator output device 51 may be a display for displaying, or may be an output device different from the display. The output device other than a display is, for example, a speaker that outputs sound or a vibrating vibrator. The operator output device 51 is disposed in, for example, the operation room 23a.

The operating machine side transmitter/receiver 55 transmits and receives information as shown in FIG. 2. The operating machine side transmitter/receiver 55 transmits (uploads) the information acquired by the operating machine information acquisition unit 40 to the calculation unit 90. The operating machine side transmitter/receiver 55 receives the information transmitted from the calculation unit 90.

The operating machine side controller 57 performs input and output of a signal (information) and the like. The information acquired by the operating machine information acquisition unit 40 is input to the operating machine side controller 57. The operating machine side controller 57 inputs and outputs a signal to and from the operating machine side transmitter/receiver 55. The operating machine side controller 57 outputs information to the operator output device 51. The operating machine side controller 57 controls notification (display and the like) to the operator output device 51.

Note that there is a case where the operation of the operating machine 10 shown in FIG. 1 is performed in a remote control unit (not shown) outside the operating machine 10 instead of the operation room 23a. In this case, part of the operating machine information acquisition unit 40 (for example, the operation amount detection unit 43) shown in FIG. 2 may be provided in the remote control unit or the operating machine 10 shown in FIG. 1. Further, in this case, the operator output device 51 may be provided in the remote control unit. Further, in this case, the operating machine side controller 57 and the operating machine side transmitter/receiver 55 shown in FIG. 2 may be provided in the operating machine 10 and the remote control unit. Note that, although the remote control unit is described here as not being a constituent of the operating machine 10, the remote control unit may be a constituent of the operating machine 10.

As shown in FIG. 1, the terminal device 60 is a device carried by the worker around the operating machine 10. The worker around the operating machine 10 carrying the terminal device 60 is referred to as a surrounding worker W. There may be a plurality of surrounding workers W. In this case, a plurality of terminal devices 60 may be provided in a manner corresponding to the surrounding workers W. The terminal device 60 is a device that performs output to the surrounding worker W. The terminal device 60 performs at least display, and may perform output other than display (voice, vibration, and the like). As shown in FIG. 2, the terminal device 60 includes a terminal device information acquisition unit 70, a display unit 81, a display switching unit 82, a terminal device side transmitter/receiver 85, and a terminal device side controller 87.

The terminal device information acquisition unit 70 acquires the information on the terminal device 60. The terminal device information acquisition unit 70 acquires the position information and the orientation information of the terminal device 60. The terminal device information acquisition unit 70 may acquire information regarding the state of the terminal device 60 other than the above. The terminal device information acquisition unit 70 includes a terminal device position detection unit 71 and a terminal device orientation detection unit 72.

The terminal device position detection unit 71 acquires the position information of the terminal device 60 by detecting the position of the terminal device 60. The terminal device position detection unit 71 detects the position of the terminal device 60 in a work site where the operating machine 10 shown in FIG. 1 is used. The terminal device position detection unit 71 shown in FIG. 2 may be, for example, a position sensor that detects the position of the terminal device 60 using a satellite positioning system, or may be a position sensor that uses an optical surveying instrument.

The terminal device orientation detection unit 72 acquires the orientation information of the terminal device 60 by detecting the orientation of the terminal device 60. The terminal device orientation detection unit 72 may be, for example, a position sensor using a satellite positioning system, a position sensor using an optical surveying instrument, or a position sensor using geomagnetism.

The display unit 81 displays information. The display unit 81 may be a light transmitting type display unit and may not be a light transmitting type display unit. As shown in FIG. 1, in a case where the display unit 81 is a light transmitting type display unit, the terminal device 60 is, for example, a glasses-type device worn by the surrounding worker W, specifically, augmented reality (AR) glasses or the like. In a case where the display unit 81 is not a light transmitting type display unit, the terminal device 60 is, for example, a smartphone or a tablet terminal held by the surrounding worker W. In a case where the display unit 81 is not a light transmitting type display unit, the terminal device 60 may include a camera 60c (see FIG. 2).

The display switching unit 82 switches a mode related to display of the terminal device 60 shown in FIG. 2 (described later).

The terminal device side transmitter/receiver 85 transmits and receives information. The terminal device side transmitter/receiver 85 transmits (uploads) the information acquired by the terminal device information acquisition unit 70 to the calculation unit 90. The terminal device side transmitter/receiver 85 receives the information transmitted from the calculation unit 90.

The terminal device side controller 87 performs input and output of a signal (information) and the like. The information acquired by the terminal device information acquisition unit 70 is input to the terminal device side controller 87. The terminal device side controller 87 inputs and outputs a signal to and from the terminal device side transmitter/receiver 85. The terminal device side controller 87 outputs information to the display unit 81 and controls the display of the display unit 81. The terminal device side controller 87 may control output (voice and the like) other than display, which is output of the terminal device 60.

The calculation unit 90 performs input and output of information, calculation, and the like. The calculation unit 90 receives the information acquired by the operating machine information acquisition unit 40 and the terminal device information acquisition unit 70. The calculation unit 90 performs calculation based on the input information. The calculation unit 90 generates information to be output to the terminal device 60. The calculation unit 90 generates information to be output to the operator output device 51. As shown in FIG. 1, the calculation unit 90 may be provided outside the operating machine 10 and outside the terminal device 60 (such as a server). At least part of the calculation unit 90 may be disposed at least inside the operating machine 10 and inside the terminal device 60. The operating machine information display system 1 may have a configuration of cloud computing in which a plurality of computers cooperate.

### (Operation)

The operating machine information display system 1 is configured to operate as described below. In the operating machine information display system 1, information is acquired and transmitted and received as described below.

The operating machine information acquisition unit 40 shown in FIG. 2 acquires information (position information, orientation information, and the like) of the operating machine 10. The information acquired by the operating machine information acquisition unit 40 is transmitted (uploaded) to the calculation unit 90 by the operating machine side transmitter/receiver 55. In a case where there are a plurality of operating machines 10, information of each of the operating machines 10 is transmitted to the calculation unit 90.

The terminal device information acquisition unit 70 acquires information (position information, orientation information, and the like) of the terminal device 60. The information acquired by the terminal device information acquisition unit 70 is transmitted (uploaded) to the calculation unit 90 by the terminal device side transmitter/receiver 85. In a case where there are a plurality of terminal devices 60, information of each of the terminal devices 60 is transmitted to the calculation unit 90.

The calculation unit 90 receives information of each of the operating machine 10 and the terminal device 60. For example, the information of each of the plurality of operating machines 10 and the plurality of terminal devices 60 is shared by the calculation unit 90. The calculation unit 90 generates (calculates) information to be output (including displayed) to the terminal device 60 and information to be output (for example, displayed) to the operator output device 51 based on the received information. Specifically, the calculation unit 90 generates the state information relating to the state of the operating machine 10 based on the position information of the operating machine 10 acquired by the operating machine information acquisition unit 40 and the position information and the orientation information of the terminal device 60 acquired by the terminal device information acquisition unit 70.

The terminal device side transmitter/receiver 85 receives the state information generated by the calculation unit 90. Then, the terminal device 60 (display unit 81) performs output based on the received state information. Further, the operating machine side transmitter/receiver 55 receives the state information generated by the calculation unit 90. Then, the operator output device 51 performs output based on the received state information.

### (Display by Terminal Device 60)

The outline of the display by the terminal device 60 shown in FIG. 1 is as described below. The terminal device 60 displays the state information of the operating machine 10 based on the position information and the orientation information of the terminal device 60 and the position information of the operating machine 10. The calculation unit 90 acquires a parameter indicating the degree of attention from the state information of the operating machine 10, and determines display information to be displayed on the terminal device 60 based on the parameter indicating the degree of attention. The parameter indicating the degree of attention is set by the calculation unit 90 based on the necessity for attention of the surrounding worker W, and is set in advance by the calculation unit 90, for example.

### (Attention Area A)

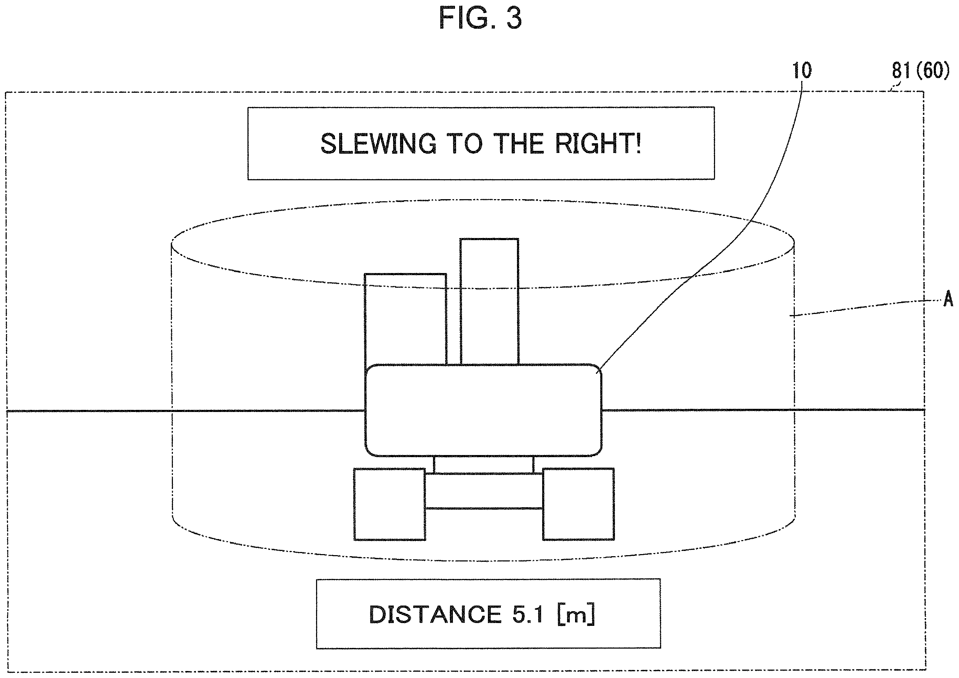

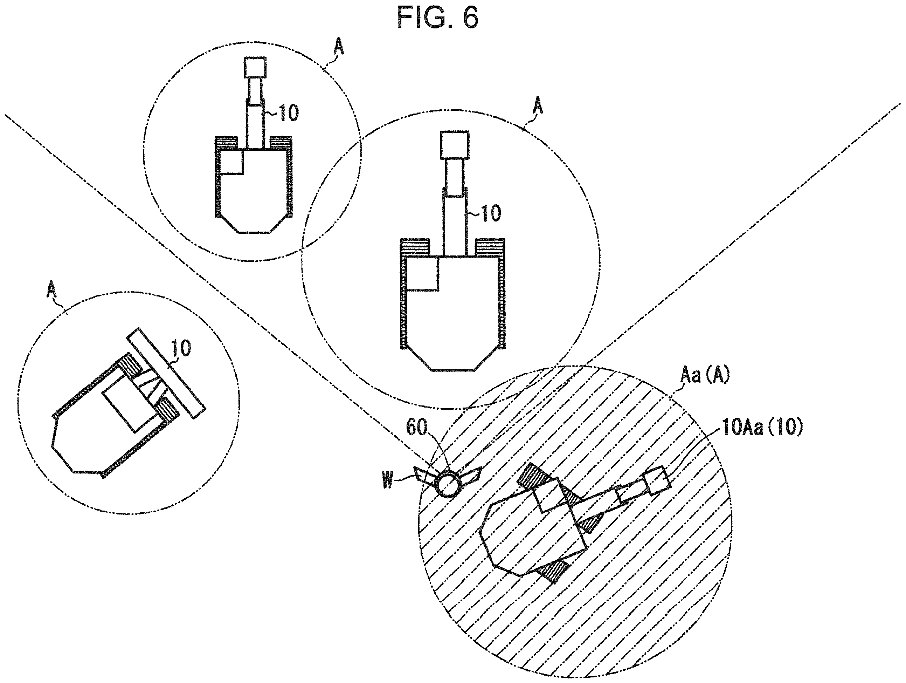

The attention area A is a parameter indicating the degree of attention. The calculation unit 90 determines the information to be displayed on the terminal device 60 based on the attention area A (see FIG. 3). The attention area A is an area set by the calculation unit 90 as an area in which attention of the surrounding worker W is required. The attention area A is an area around the operating machine 10. As shown in FIG. 3, for example, only one (one-stage) attention area A may be set to one operating machine 10, or a plurality (a plurality of stages) of attention areas A may be set to one operating machine 10. Hereinafter, the one-stage attention area A will be described. The attention area A may be set over the entire outer circumference of the operating machine 10 (see FIG. 6) and may be, for example, a columnar shape. The attention area A does not have to be set over the entire outer circumference of the operating machine 10 (see FIG. 7A and the like).

The terminal device 60 displays the attention area A. More specifically, the display unit 81 of the terminal device 60 displays (projects) an image that visualizes the information (coordinates) of the attention area A. The image that visualizes the information (coordinates) of the attention area A is also simply referred to as the "attention area A". The terminal device 60 displays the attention area A by using an augmented reality (AR) function. Specific examples are [Example A1] and [Example A2] described below.

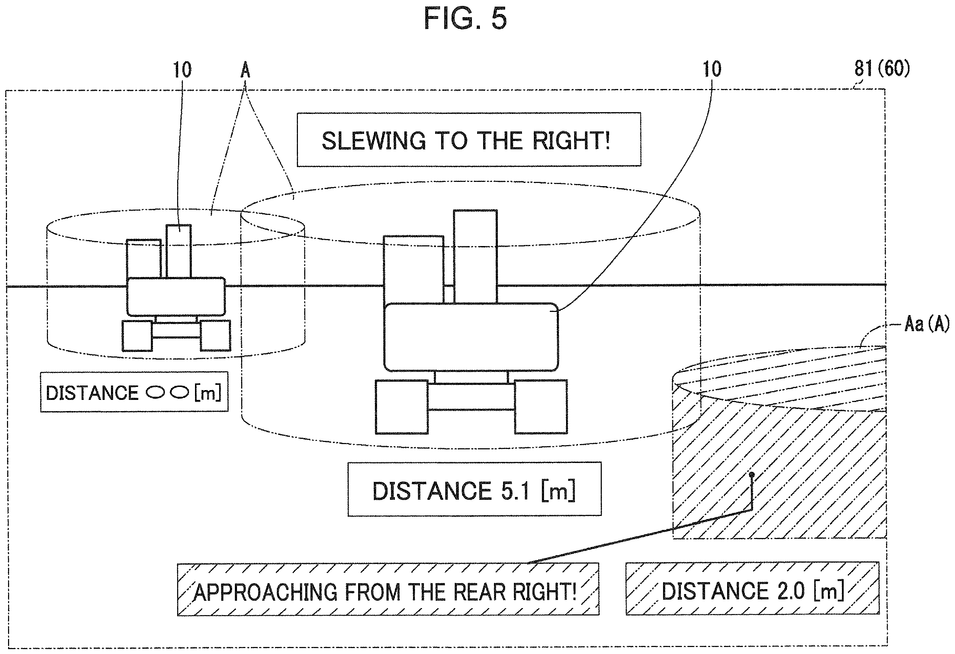

[Example A1] In a case where the display unit 81 is a light transmission type display unit, the terminal device 60 displays (displays in a superimposing manner) the attention area A so that the attention area A is superimposed on the foreground seen by the surrounding worker W (see FIG. 1, the same applies to the surrounding worker W hereinafter) through the terminal device 60 (display unit 81). In this case, the surrounding worker W can see the actual image of the work site and the image of the attention area A. For example, the surrounding worker W can see the actual image of the operating machine 10 and the image of the attention area A corresponding to the operating machine 10. In the example of FIG. 6, the terminal device 60 may display the attention area A corresponding to an operating machine 10Aa outside the visual range of the surrounding worker W (not in the field of view, outside the viewing angle) as an attention area Aa. In this case, the attention area Aa displayed by the terminal device 60 is as shown in FIG. 5. In the example of FIG. 5, part of the attention area Aa corresponding to the operating machine 10Aa is displayed, and the operating machine 10Aa is not displayed inside the attention area Aa. In this case, the surrounding worker W can see the attention area Aa corresponding to the operating machine 10Aa even if the worker cannot see the operating machine 10Aa (see FIG. 6). For example, as shown in FIG. 6, the terminal device 60 displays the attention area Aa in a case where the terminal device 60 exists inside the attention area Aa (the same applies to [Example A2] described below).

[Example A2] In a case where the display unit 81 (see FIG. 2) is not a light transmission type display unit, as shown in FIG. 3, the terminal device 60 displays the attention area A so that the attention area A is superimposed on an image captured by the terminal device 60 (specifically, an image captured by the camera 60c (see FIG. 2)). In this case, the surrounding worker W can see the image of the work site and the image of the attention area A. For example, the surrounding worker W can see the image of the operating machine 10 and the image of the attention area A corresponding to the operating machine 10. As shown in FIG. 5, the terminal device 60 preferably displays the attention area Aa corresponding to the operating machine 10Aa (see FIG. 6) outside the range of the image captured by the terminal device 60 (outside the angle of view of the camera 60c). In this case, the surrounding worker W can see the attention area Aa corresponding to the operating machine 10Aa even if the operating machine 10Aa (see FIG. 6) is not shown in the image captured by the terminal device 60. In this manner, the surrounding worker W can confirm the existence of the operating machine 10Aa.

### (Information on Whether or Not Surrounding Worker W is Present Inside Attention Area A)

The terminal device 60 displays information regarding whether or not the terminal device 60 (surrounding worker W) exists inside the attention area A shown in FIG. 3. Specific examples are [Example B1] and [Example B2] described below.

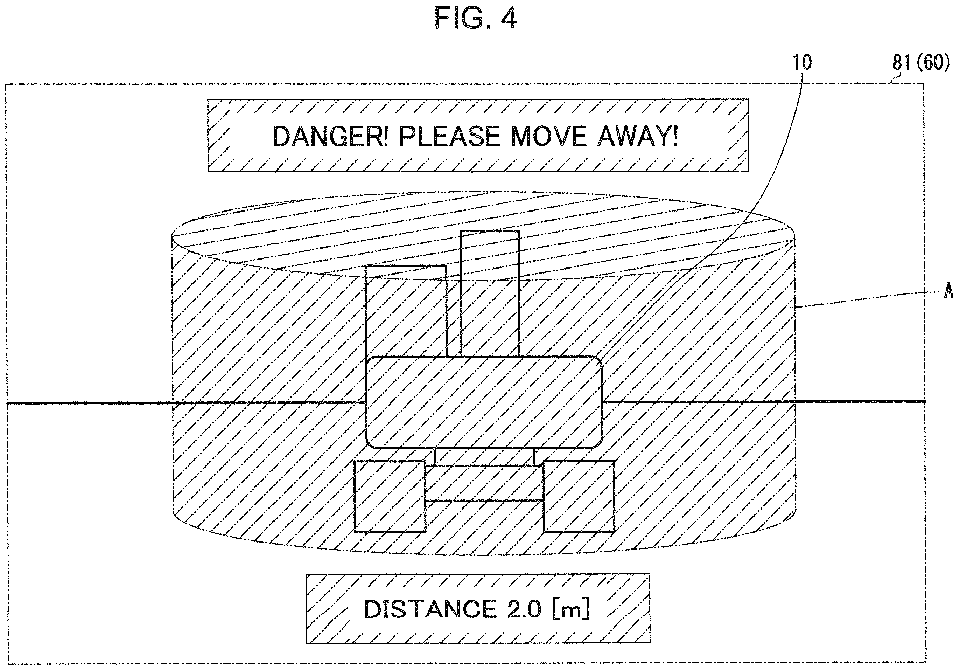

[Example B1] The terminal device 60 changes the display color of the attention area A depending on whether or not the terminal device 60 exists inside the attention area A (see FIGS. 3 and 4). At this time, the terminal device 60 changes at least any of, for example, hue, density (transparency), lightness, and saturation of the attention area A. The same applies to an example in which the display color is changed described below. As shown in FIG. 3, in a case where the terminal device 60 exists outside the attention area A, the terminal device 60 displays the attention area A in blue, green, or the like. On the other hand, as shown in FIG. 4, in a case where the terminal device 60 exists inside the attention area A, the terminal device 60 displays the attention area A in red or the like. In this manner, the terminal device 60 can call attention of the surrounding worker W. Note that FIG. 4 shows a state in which the attention area A is viewed from the outside of the attention area A for comparison with FIG. 3.

[Example B2] The terminal device 60 may change the display color of a portion (character, figure, or the like described later) other than the attention area A depending on whether or not the terminal device 60 exists inside the attention area A (see FIG. 3 and FIG. 4). For example, the terminal device 60 may change the color of a portion other than the attention area A to the same color as the attention area A or a different color from the attention area A depending on whether or not the terminal device 60 exists inside the attention area A. For example, in FIG. 3, the terminal device 60 may display a message indicating the state of the operating machine 10 (Slewing to the right!) and a message indicating the distance between the terminal device 60 and the operating machine 10 (Distance 5.1 [m]) in the same color as the attention area A, or in a different color from the attention area A. In FIG. 4, the terminal device 60 may display a message relating to the operating machine 10 (Danger! Please move away!) and a message indicating the distance between the terminal device 60 and the operating machine 10 (Distance 2.0 [m]) in the same color as the attention area A, or in a different color from the attention area A. The messages shown in FIGS. 3 and 4 are examples of the state information. Note that the information indicating whether or not the terminal device 60 exists in the attention area A is an example of the parameter indicating the degree of attention.

### (Switching Display Mode of Attention Area A)

There is a case where the surrounding worker W works in the vicinity of the operating machine 10 shown in FIG. 3. Work in the vicinity of the operating machine 10 includes, for example, maintenance work of the operating machine 10 and replacement work of the attachment 30. In a case where the surrounding worker W works in the vicinity of the operating machine 10, if, for example, the attention area A is displayed in the entire area of the display unit 81, the attention area A may interfere with the work of the surrounding worker W. In view of the above, the display switching unit 82 (see FIG. 2) is configured to be able to switch the display of the attention area A. Specifically, in a case where a first display mode is selected by the display switching unit 82, the terminal device 60 displays the attention area A similarly to the above. In a case where a second display mode is selected by the display switching unit 82 (see FIG. 2), the terminal device 60 hides the attention area A. Alternatively, in a case where the second display mode is selected by the display switching unit 82, the terminal device 60 reduces an information amount of the display in the attention area A as compared with the case where the first display mode is selected. To "reduce an information amount of the display in the attention area A" may mean, for example, making the display color of the attention area A lighter or displaying the attention area A narrower (the attention area A itself may be set to be narrower). In a case of reducing the information amount of the display in the attention area A, the terminal device 60 may reduce the display other than the attention area A. The mode for reducing the display other than the attention area A is as described below.

### (Display Other Than Attention Area A)

The terminal device 60 may perform display based on the parameter indicating the degree of attention acquired from the state information of the operating machine 10 other than the attention area A. The terminal device 60 can display information in various modes. For example, the terminal device 60 may display a message ("Slewing to the right!", "Distance 5.1 [m]" in the example shown in FIG. 3), or may display a figure (arrow or the like). The terminal device 60 may change the display color, the characters, or the figure according to a change in the state information of the operating machine 10. For example, the terminal device 60 may display information on the operating machine 10 corresponding to the attention area A in the vicinity or inside the display of the attention area A. The terminal device 60 may display the information on the operating machine 10 so that the information is superimposed on the operating machine 10.

Specific examples of the display of the terminal device 60 based on the information other than the attention area A are [Example C1] to [Example C3b] described below and the like. [Example C1] The terminal device 60 may display the distance from the terminal device 60 to the operating machine 10 ("Distance 5.1 [m]" in the example shown in FIG. 3). For example, at least one of the display color of the characters indicating the distance and the display color around the characters indicating the distance may be changed according to the distance from the terminal device 60 to the operating machine 10.

[Example C2] The terminal device 60 may display information regarding the operation of the operating machine 10. [Example C2a] The terminal device 60 may display information regarding the travelling of the operating machine 10. For example, the terminal device 60 may perform display indicating that the operating machine 10 is approaching the terminal device 60. In this case, the terminal device 60 may indicate from which direction the operating machine 10 is approaching the terminal device 60. In this case, the terminal device 60 may display a message ("Approaching from the rear right!" in the example shown in FIG. 5), or may display a figure indicating the direction in which the operating machine 10 is approaching.

[Example C2b] The terminal device 60 may display information regarding the slewing of the upper slewing body 23 with respect to the lower travelling body 21, or may display the direction of slewing. In this case, the terminal device 60 may display a message ("Slewing to the right!" in the example shown in FIG. 3) or may display a figure indicating the direction of slewing. [Example C2c] Similarly, for example, the terminal device 60 may display information regarding the operation of the attachment 30 (see FIG. 1).

[Example C3] The terminal device 60 may display information regarding the operation by the operator of the operating machine 10. [Example C3a] The terminal device 60 may display information on whether or not the operator is in contact with the operation unit 43a (see FIG. 2). For example, the terminal device 60 may display information on whether or not the operator is holding the operation lever. For example, the display color of a predetermined portion of the display of the display unit 81 may be changed depending on whether or not the operator is in contact with the operation unit 43a (see FIG. 2).

[Example C3b] The terminal device 60 may display whether or not operation by the operation unit 43a (see FIG. 2) is possible. For example, the terminal device 60 may display whether or not the lever lock for locking the lever operation is engaged (whether or not the bar which is the lever lock is raised). For example, the terminal device 60 may change the display color of a predetermined portion of the display of the display unit 81 depending on whether or not the operation by the operation unit 43a (see FIG. 2) is possible.

### (Output Other Than Display by Terminal Device 60)

The terminal device 60 may perform output other than the display based on the parameter indicating the degree of attention acquired from the state information of the operating machine 10. For example, the terminal device 60 may output a sound (voice, warning sound, or the like) or may generate vibration. The terminal device 60 may output a combination of the display and an output other than the display. Specifically, for example, when the terminal device 60 enters the inside of the attention area A from the outside, the terminal device 60 may change the display color of the attention area A or the like and also output sound and output vibration. In this case, more attention of the surrounding worker W can be called.

### (Operation of Operator Output Device 51)

As shown in FIG. 1, the operator output device 51 displays the position information of the terminal device 60. The operator output device 51 displays information indicating the relative position of the operating machine 10 and the terminal device 60. Specifically, for example, the operator output device 51 performs display as if the operating machine 10 and the surrounding workers W (terminal device 60) are viewed from above. The operator output device 51 displays a figure indicating the operating machine 10 and a figure indicating the surrounding worker W.

The operator output device 51 outputs a warning in a case where the terminal device 60 exists inside the attention area A (see FIG. 3). The warning by the operator output device 51 may be a warning by display or a warning by sound (voice, warning sound, or the like). When the operator output device 51 issues a warning by display, the operator output device 51 may change the display color of at least part of the screen of the operator output device 51. Specifically, for example, the operator output device 51 may display the display color of a predetermined portion (for example, a figure indicating the surrounding worker W) in blue or green in a case where the terminal device 60 does not exist inside the attention area A (see FIG. 3), and display the display color of the predetermined portion in red in a case where the terminal device 60 exists inside the attention area A.

### (Setting of Attention Area A)

The attention area A (see FIG. 3) is set based on at least the position information of the operating machine 10. The attention area A may be set based on the position information of the operating machine 10 and information other than the position information. For example, the calculation unit 90 sets the attention area Abased on at least any of the orientation of the operating machine 10, the operation amount, the operating speed, and the posture of the attachment 30.

### (Orientation)

The calculation unit 90 shown in FIG. 2 sets the attention area Abased on the orientation of the operating machine 10. The orientation of the operating machine 10 is detected by the operating machine orientation detection unit 42.

### (Operation Amount)

The calculation unit 90 sets the attention area A (see FIG. 7A) based on the operation amount of the operating machine 10. The operation amount of the operating machine 10 is detected by the operation amount detection unit 43. The calculation unit 90 sets the attention area A so that the attention area A becomes wider as the operation amount of the operating machine 10 increases. The calculation unit 90 sets the attention area A so that the attention area A becomes narrower as the operation amount of the operating machine 10 becomes smaller. The calculation unit 90 sets the attention area A based on at least any of the slewing operation amount, the travelling operation amount, and the attachment operation amount.

### (Slewing Operation Amount)

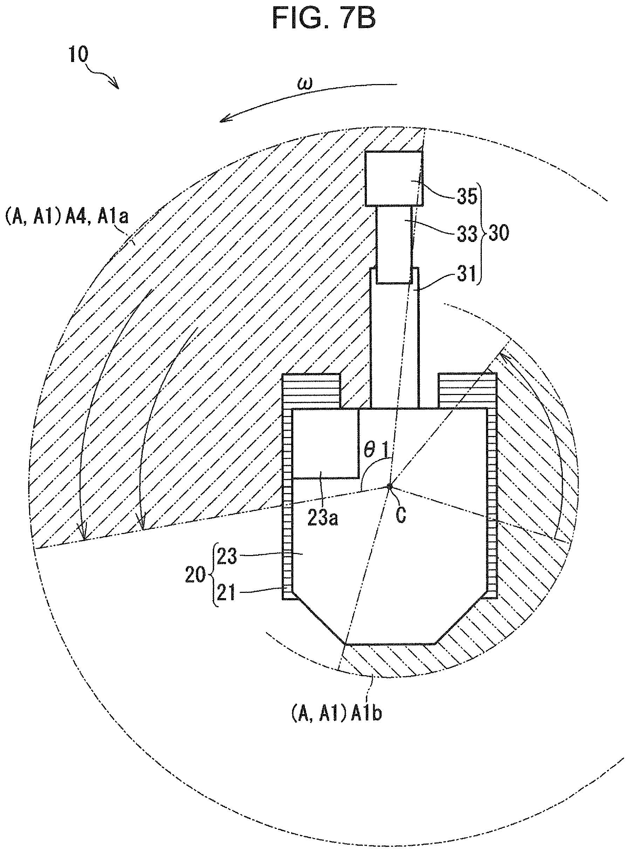

As shown in FIG. 7A, the calculation unit 90 (see FIG. 2) sets the attention area Abased on the slewing operation amount acquired by the operation amount detection unit 43 (see FIG. 2). The slewing operation amount is an operation amount of slewing of the upper slewing body 23 with respect to the lower travelling body 21. The calculation unit 90 (see FIG. 2) sets the attention area A so that the attention area A becomes wider as the slewing operation amount increases (see FIGS. 7A and 7B).

### [Specific Example of Case Where Attention Area A is Changed According to Parameter Related to Slewing]

A specific example of a case where the attention area A is changed based on the slewing operation amount will be described with reference to FIGS. 7A and 7B. An area of part or all of the attention area A, which is set based on the slewing operation amount, is defined as the attention area A1. The attention area A1 is set to an area where the operating machine 10 is scheduled to pass when the upper slewing body 23 slews with respect to the lower travelling body 21, and a peripheral portion of the area. The attention area A1 is set to, for example, an area where the upper slewing body 23 and the attachment 30 are scheduled to pass when the upper slewing body 23 slews, and a peripheral portion of the area. Of the attention area A1, the attention area A1 set based on the position of the attachment 30 is defined as an attention area A1a, and the attention area A1 set based on the position of a rear end portion of the upper slewing body 23 is defined as an attention area A1b.

The attention area A1a is set to an area where the attachment 30 is scheduled to pass when the upper slewing body 23 slews, and a peripheral portion of the area (for example, an area further in front of the upper slewing body 23 than the attachment 30 or the like). The attention area A1a as viewed from above is set to, for example, a fan shape (may be substantially a fan shape). The center of the fan shape may be set at a position that coincides with (or substantially coincides with) a slewing center C, or may be set at a position away from the slewing center C (for example, a central portion of the operating machine 10 as viewed from above). A radius of the fan shape may be set based on the posture of the attachment 30 (such as the reach L4 described later) (details will be described later). The radius of the fan shape may be a constant value, or may be set based on, for example, the maximum value of the reach L4 of the attachment 30.

The attention area A1b is set to an area where the rear end portion of the upper slewing body 23 is scheduled to pass when the upper slewing body 23 slews, and a peripheral portion of the area (for example, an area further on the rear side than the rear end portion of the upper slewing body 23). The attention area A1b is set to, for example, a fan shape similarly to the attention area A1a. Note that the attention area A1 may be set to a portion (a portion other than the attention area A1a and the attention area A1b) not illustrated in FIGS. 7A or 7B. For example, the attention area A1 may be set to an area where the operation room 23a is scheduled to pass when the upper slewing body 23 slews. The point that the attention area A may be set to a portion not illustrated similarly applies to the case where the attention area A is set based on the travelling operation amount and the case where the attention area A is set based on the attachment operation amount.

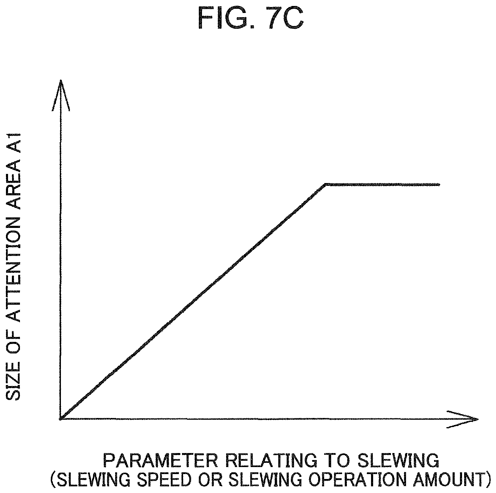

As shown in FIG. 7C, the attention area A1 is set to be wider as the slewing operation amount increases (see FIGS. 7A and 7B). The relationship between the size of the attention area A1 and the slewing operation amount is set by the calculation unit 90 (see FIG. 2). Specifically, for example, the relationship between a central angle θ1 shown in FIG. 7A and the slewing operation amount is set by the calculation unit 90 (the same applies to the central angle of the fan shape of the attention area A1b).

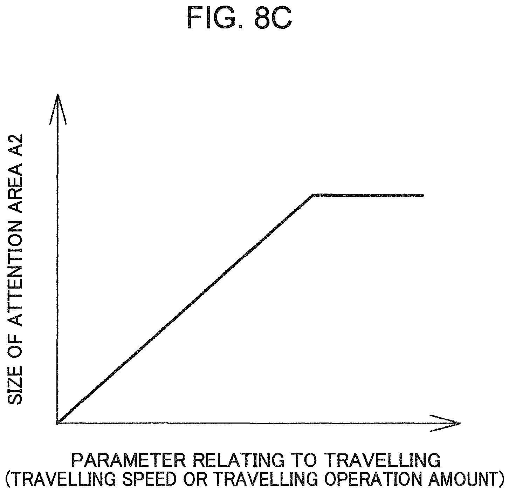

[Setting Example 1] As shown in FIG. 7C, the size of the attention area A1 may or may not be proportional to the slewing operation amount. [Setting Example 2] The size of the attention area A1 may be set to a constant maximum value in a case where the slewing operation amount is equal to or more than a predetermined value. [Setting Example 3] The size of the attention area A1 may be set to zero in a case where the slewing operation amount is zero, or may be set within a certain minimum range. [Setting Example 1], [Setting Example 2], and [Setting Example 3] similarly apply to the case where the attention area A is set based on at least any of the travelling operation amount, the attachment operation amount, and the attachment posture (see FIGS. 8C, 9C, and 10B).

### (Travelling Operation Amount)

As shown in FIG. 8A, the calculation unit 90 (see FIG. 2) sets the attention area Abased on the travel operation amount (operation amount of travelling of the operating machine 10) acquired by the operation amount detection unit 43 (see FIG. 2). The calculation unit 90 (see FIG. 2) sets the attention area A so that the attention area A becomes wider as the travelling operation amount increases.

### [Specific Example of Case Where Attention Area A is Changed According to Parameter Related to Travelling]

A specific example of the case where the attention area A is changed based on the travelling operation amount will be described. An area of part or all of the attention area A, which is set based on the travelling operation amount, is defined as the attention area A2. The attention area A2 is set to an area where the operating machine 10 is scheduled to pass when the lower travelling body 21 travels, and a peripheral portion of the area. FIG. 8A shows an example of the attention area A2 in a case where the front-rear direction of the lower travelling body 21 and the front-rear direction of the upper slewing body 23 coincide with each other and the lower travelling body 21 moves backward. In this example, the attention area A2 is set to an area from the rear end portion of the operating machine 10 to the position on the rear side (the travelling direction side of the operating machine 10) by a distance L2 from the rear end portion of the operating machine 10 and areas on the left and right of the position where the operating machine 10 is scheduled to pass.

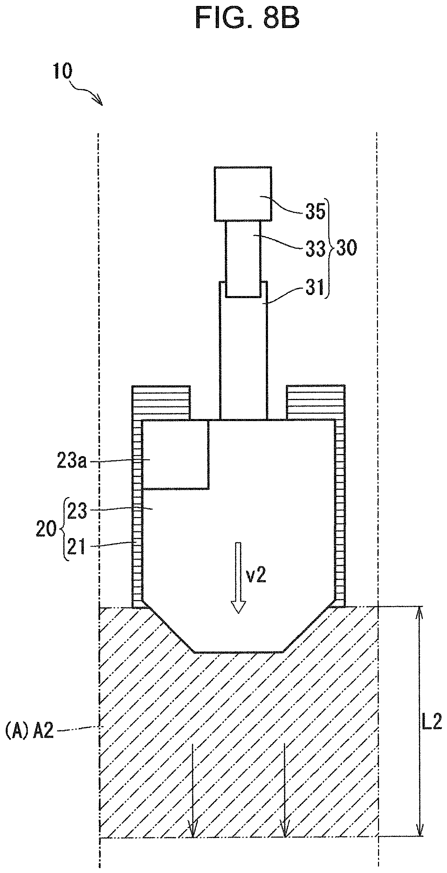

As shown in FIG. 8C, the attention area A2 is set to be wider as the travelling speed or the travelling operation amount increases (see FIGS. 8A and 8B). The relationship between the size of the attention area A2 and the travelling operation amount or the travelling operation amount is set by the calculation unit 90 (see FIG. 2). Specifically, for example, the relationship between the distance L2 shown in FIG. 8A and the travelling operation amount is set by the calculation unit 90.

### (Attachment operation amount)

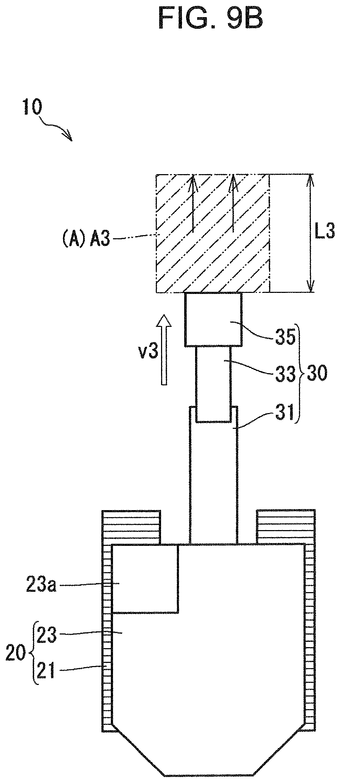

As shown in FIG. 9A, the calculation unit 90 (see FIG. 2) sets the attention area Abased on the attachment operation amount (operation amount of the attachment 30) acquired by the operation amount detection unit 43 (see FIG. 2). The calculation unit 90 sets the attention area A so that the attention area A becomes wider as the attachment operation amount increases (see FIGS. 9A and 9B).

### [Specific Example of Case Where Attention Area A is Changed According to Parameter Related to Operation of Attachment 30]

A specific example of a case where the attention area A is changed based on the attachment operation amount will be described. An area of part or all of the attention area A, which is set based on the attachment operation amount, is defined as the attention area A3. The attention area A3 is set to an area where the attachment 30 is scheduled to pass when the attachment 30 is operated, and a peripheral portion of the area. FIG. 9A shows an example of the attention area A3 in a case where the bucket 35 moves to the front side of the upper slewing body 23. In this example, the attention area A3 is set to an area from the front end portion of the attachment 30 to the position on the front side (the moving direction side of the attachment 30) by a distance L3 from the front end portion of the attachment 30, and areas on the left and right of the area where the attachment 30 is scheduled to pass.

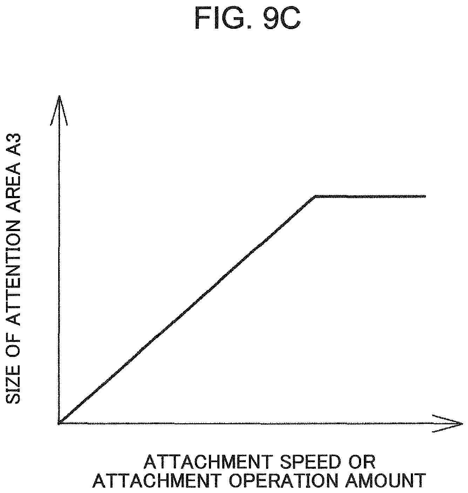

As shown in FIG. 9C, the attention area A3 is set to be wider as the attachment operation amount increases (see FIGS. 9A and 9B). The relationship between the size of the attention area A3 and the attachment operation amount is set by the calculation unit 90 (see FIG. 2). Specifically, for example, the relationship between the distance L3 shown in FIG. 9A and the attachment operation amount is set by the calculation unit 90.

### (Operating Speed)

The calculation unit 90 shown in FIG. 2 sets the attention area A (see FIG. 7A) based on the operating speed of the operating machine 10. The operating speed of the operating machine 10 is detected by the speed detection unit 44. The calculation unit 90 sets the attention area A so that the attention area A becomes wider as the operating speed of the operating machine 10 increases. The calculation unit 90 sets the attention area A so that the attention area A becomes narrower as the operating speed of the operating machine 10 becomes lower. The calculation unit 90 sets the attention area A based on at least one of the slewing speed ω (see FIG. 7A), the travelling speed v2 (see FIG. 8A), and the attachment speed v3 (see FIG. 9A).

### (Slewing Speed ω)

As shown in FIG. 7A, the calculation unit 90 (see FIG. 2) sets the attention area A1 based on the slewing speed ω acquired by the speed detection unit 44 (see FIG. 2). The slewing speed ω is the slewing speed of the upper slewing body 23 with respect to the lower travelling body 21. The calculation unit 90 sets the attention area A1 so that the attention area A1 becomes wider as the slewing speed ω increases (see FIGS. 7A, 7B, and 7C). The specific example in this case is similar to [Specific example of case where attention area A is changed according to parameter related to slewing] (however, "operation amount" is read as "speed").

### (Travelling speed v2)

As shown in FIG. 8A, the calculation unit 90 (see FIG. 2) sets the attention area A2 based on the travelling speed v2 (travelling speed v2 of the operating machine 10) acquired by the speed detection unit 44 (see FIG. 2). The calculation unit 90 sets the attention area A2 so that the attention area A2 becomes wider as the travelling speed v2 increases (see FIGS. 8A, 8B, and 8C). A specific example in this case is similar to [Specific Example of Case Where Attention Area A is Changed According to Parameter Related to Travelling] (however, "operation amount" is read as "speed").

### (Attachment Speed v3)

As shown in FIG. 9A, the calculation unit 90 (see FIG. 2) sets the attention area Abased on the attachment speed v3 (the speed of the attachment 30 with respect to the machine main body 20) acquired by the speed detection unit 44 (see FIG. 2). The calculation unit 90 sets the attention area A so that the attention area A becomes wider as the attachment speed v3 increases (see FIGS. 9A, 9B, and 9C). The specific example in this case is similar to [Specific Example of Case Where Attention Area A is Changed According to Parameter Related to Operation of Attachment 30] (however, "operation amount" is read as "speed").

### (Regarding Operation Amount and Speed)

An advantage of the case where the attention area A is set according to the operation amount of the operating machine 10 shown in FIG. 7A is as described below. Even if a certain operating speed (for example, the slewing speed ω)is zero at a certain time point, the speed increases when operation for increasing the speed (for example, slewing operation) is performed. For this reason, even if the speed is zero at a certain time point, there is a case where it is preferable to call attention of the surrounding worker W (see FIG. 6). In such a case, it is preferable to set the attention area A according to the operation amount.

An advantage of the case where the attention area A is set according to the speed of the operating machine 10 is as described below. Even if the operation amount of the operation (for example, slewing operation) of changing a certain operating speed (for example, the slewing speed ω) becomes zero at a certain time point, there is a case where the operating speed (for example, the slewing speed ω) does not become zero for a while. In this case, there is a case where it is preferable to call attention of the surrounding worker W (see FIG. 6) even if the operation amount is zero. In such a case, it is preferable to set the attention area A according to the speed.

Note that the calculation unit 90 (see FIG. 2) may set, as the attention area A, an area obtained by overlapping two or more areas among the attention area A1 (see FIG. 7A), the attention area A2 (see FIG. 8A), and the attention area A3 (see FIG. 9A) set based on various operation amounts of the operating machine 10. Further, the calculation unit 90 (see FIG. 2) may set, as the attention area A, an area obtained by overlapping two or more areas among the attention areas A1, A2, and A3 set based on various operating speeds of the operating machine 10. Further, the calculation unit 90 (see FIG. 2) may set, as the attention area A, an area obtained by overlapping the attention areas A set based on the operation amount of the operating machine 10 and the attention area A set based on the operating speed of the operating machine 10.

### (Posture of Attachment 30)

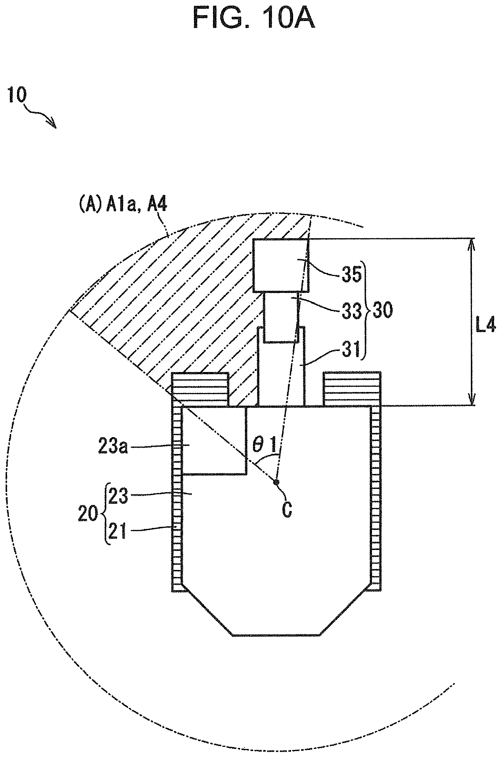

As shown in FIG. 10A, the calculation unit 90 (see FIG. 2) sets the attention area A based on the posture of the attachment 30 (the posture of the attachment 30 with respect to the machine main body 20). The posture of the attachment 30 is detected by the attachment posture detection unit 45 (see FIG. 2). The calculation unit 90 (see FIG. 2) changes the size of the attention area A based on the posture of the attachment 30.

A specific example of a case where the attention area A is changed based on the posture of the attachment 30 will be described. An area of part or all of the attention area A, which is set based on the posture of the attachment 30, is defined as the attention area A4. Of the attention area A1 (see FIG. 7A), the attention area A2 (see FIG. 8A), and the attention area A3 (see FIG. 9A), a portion set based on the position of the attachment 30 is changed based on the posture of the attachment 30. In the example shown in FIG. 10A, of the attention area A1 set based on the slewing operation amount (or the slewing speed ω), the attention area A1a set based on the position of the attachment 30 is set based on the posture of the attachment 30 (the attention area A1a is the attention area A4).

As shown in FIGS. 7A and 10A, the size of the attention area A4 can be changed based on the position of the attachment 30 in the front-rear direction of the upper slewing body 23. Specifically, for example, the size of the attention area A4 can be changed based on the reach L4. The reach L4 is a distance from the front end portion of the upper slewing body 23 to the front end portion of the attachment 30. Note that the size of the attention area A4 may be changed based on the position of the attachment 30 in at least any of the vertical direction and the lateral direction (the lateral direction of the upper slewing body 23).

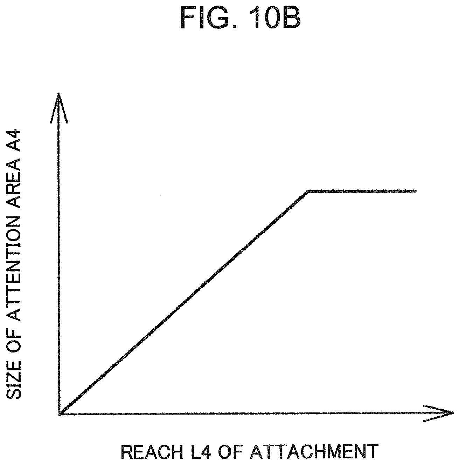

In the example shown in FIG. 10B, the attention area A4 is set to be wider as the reach L4 is longer (see FIGS. 7A and 10A). The relationship between the size of the attention area A4 and the reach L4 is set by the calculation unit 90 (see FIG. 2). Specifically, for example, the attention area A4 is set so that the radius of the fan shape of the attention area A4 (attention area A1a) becomes larger as the reach L4 shown in FIG. 10A is longer.

### (Change in Display When Size of Attention Area A Changes)

In a case where the calculation unit 90 (see FIG. 2) changes the size of the attention area A shown in FIG. 3, the terminal device 60 may change the display color of the attention area A (a specific example of the change in the display color is described above). In a case where the calculation unit 90 (see FIG. 2) changes the size of the attention area A, the terminal device 60 may change the display color of the display (characters, and the like) other than the attention area A, and may perform output (sound, vibration, and the like) other than the display.

### (Example of Processing of Calculation Unit 90 Related to Attention Area A)

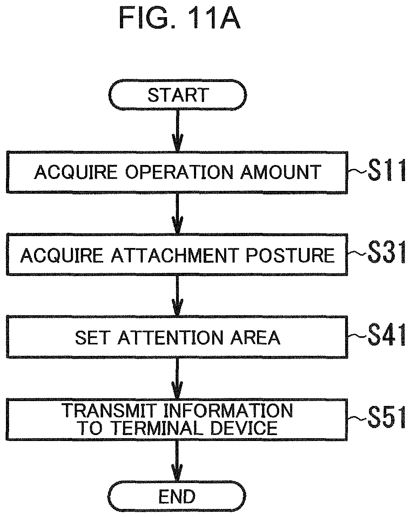

FIGS. 11A to 11C show a flowchart of the processing of the calculation unit 90 (see FIG. 2) related to the attention area A (see FIG. 7A). The process of the processing by the calculation unit 90 shown in FIG. 2 is, for example, [Example D1] to [Example D3] described below and the like. Hereinafter, the operating machine 10, the terminal device 60, and the calculation unit 90 will be described mainly with reference to FIG. 1. The attention area A will be mainly described with reference to FIG. 3.

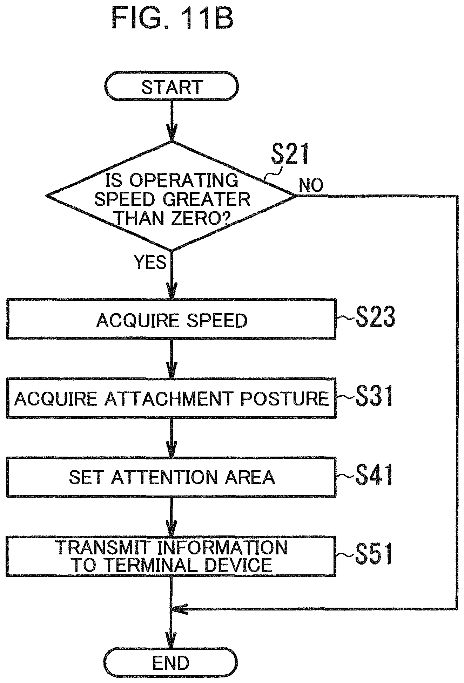

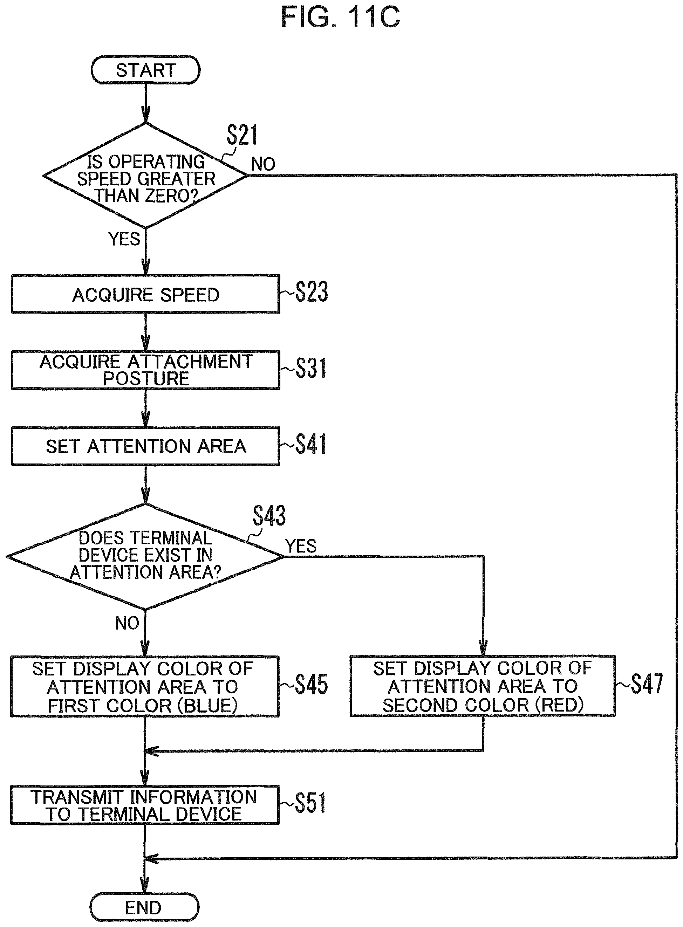

[Example D1] With reference to FIG. 11A, an example of processing of the calculation unit 90 in a case where the calculation unit 90 sets the attention area Abased on the operation amount of the operating machine 10 and the like is as described below. At the time point of "Start" of the process shown in FIG. 11A, the calculation unit 90 is assumed to have already acquired the position and orientation of the operating machine 10 and the position and orientation of the terminal device 60 (the same applies to the flowchart shown in FIGS. 11B and 11C). Hereinafter, each step will be described with reference to FIG. 11A. The calculation unit 90 acquires the operation amount acquired by the operation amount detection unit 43 shown in FIG. 2 (Step S11). Further, the calculation unit 90 acquires the attachment posture acquired by the attachment posture detection unit 45 (Step S31). The calculation unit 90 sets the attention area Abased on the information on the operating machine 10 including the information on the operation amount and the information on the attachment posture (Step S41). Then, the calculation unit 90 transmits the information relating to the set attention area A to the terminal device 60 (Step S51). Then, the calculation unit 90 ends the process (for example, returns to Start).

[Example D2] With reference to FIG. 11B, an example of processing of the calculation unit 90 in a case where the calculation unit 90 sets the attention area Abased on the speed of the operating machine 10 and the like is as described below. Here, a difference from [Example D1] (see FIG. 11A) will be mainly described. Hereinafter, each step will be described with reference to FIG. 11B. The calculation unit 90 determines whether or not the operating speed of the operating machine 10 is greater than zero (Step S21). In a case where the operating speed of the operating machine 10 is zero or less (NO in Step S21), the calculation unit 90 ends the process. In a case where the operating speed of the operating machine 10 is greater than zero (YES in Step S21), the calculation unit 90 acquires a value of the speed acquired by the speed detection unit 44 shown in FIG. 2 (Step S23). For the determination of whether the speed is greater than zero (Step S21) and the acquisition of the speed (Step S23), at least any of the slewing speed ω (see FIG. 7A), the travelling speed v2 (see FIG. 8A), and the attachment speed v3 (see FIG. 9A) is used. Step S31 is similar to that in [Example D1]. In Step S41, the calculation unit 90 sets the attention area Abased on the information on the operating machine 10 including the information on the speed and the information on the attachment posture. Then, the calculation unit 90 performs the processing of Step S51 in a similar manner to that in [Example D1], and ends the process.

[Example D3] With reference to FIG. 11C, an example of the processing of the calculation unit 90 in a case of determining whether or not the terminal device 60 exists inside the attention area A is as described below. Here, a difference from [Example D2] (see FIG. 11B) will be mainly described. Hereinafter, each step will be described with reference to FIG. 11C. The calculation unit 90 determines the attention area A in a similar manner to that in [Example D2] (Step S41). Then, the calculation unit 90 determines whether or not the terminal device 60 exists inside the attention area A (Step S43). In a case where the terminal device 60 does not exist inside the attention area A (NO in Step S43), the calculation unit 90 sets the display setting of the attention area A to be displayed on the terminal device 60 to "first setting". In this case, the calculation unit 90 sets, for example, the display color of the attention area A to be displayed on the terminal device 60 to a "first color" (for example, blue) (Step S45). In a case where the terminal device 60 exists inside the attention area A (YES in Step S43), the calculation unit 90 sets the display setting of the attention area A to be displayed on the terminal device 60 to "second setting". In this case, the calculation unit 90 sets, for example, the display color of the attention area A to be displayed on the terminal device 60 to a "second color" (for example, red) (Step S47). Then, the calculation unit 90 transmits the information relating to the attention area A (including the information on the setting in Step S45 or S47) to the terminal device 60 (Step S51). Then, the calculation unit 90 ends the process.

### (Consideration)

Consideration will be made on an advantage of the case where the attention area A is set based on at least one of the operation amount and the operating speed of the operating machine 10 shown in FIG. 6. In the case where the attention area A is set based only on the position of the operating machine 10, it is considered that the attention area A is set based on the entire movable range of the operating machine 10 and the attention area A is displayed on the terminal device 60. In this case, a place where the necessity for attention of the surrounding worker W is low may also be displayed as the attention area A. Then, the display of the attention area A may become an excessive display (warning) for the surrounding worker W, which may impair workability. On the other hand, in the case where the attention area A is set based on at least one of the operation amount and the operating speed of the operating machine 10, an advantage described below is obtained. In this case, the position where the necessity for attention of the surrounding worker W is high can be displayed as the attention area A on the terminal device 60, and the position where the necessity for the attention is low can be not displayed on the terminal device 60 as the attention area A.

Consideration will be made on an advantage of setting the attention area A based on the information on the travelling of the operating machine 10 (for example, the travelling operation and the travelling speed v2 (see FIG. 8A)). For example, Patent Literature 1 described above describes a technique for drawing a slew trajectory of the attachment around the operating machine with laser light (see FIG. 9 and the like in the document). In the technique described in the document, drawing is performed with laser light without considering the travelling of the operating machine. For this reason, there is a case where, when the operating machine is travelling, the range of drawing with laser light becomes narrow with respect to the area where the necessity for attention of the worker around the operating machine is high. On the other hand, in the case where the attention area A is set based on the information on the travelling of the operating machine 10, the position where the necessity for attention of the surrounding worker W is high when the operating machine 10 is travelling can be displayed as the attention area A on the terminal device 60.

Note that the operating machine information display system 1 of the present embodiment may be configured so that only part of the above advantages is obtained. Specifically, for example, the attention area A may be set based only on the position of the operating machine 10, and the attention area A may be set without being based on the information relating to the travelling of the operating machine 10, for example.

### (Effect)

An effect of the operating machine information display system 1 shown in FIG. 1 is as described below.

### (Effect of First Invention)

The operating machine information display system 1 is a system that displays information on the operating machine 10. As shown in FIG. 2, the operating machine information display system 1 includes the operating machine information acquisition unit 40, the terminal device 60, and the calculation unit 90. The operating machine information acquisition unit 40 acquires the information on the operating machine 10, including the position information on the operating machine 10. As shown in FIG. 1, the terminal device 60 is carried by the worker (surrounding worker W) around the operating machine 10 and is capable of displaying information. The terminal device 60 includes the terminal device information acquisition unit 70 shown in FIG. 2. The terminal device information acquisition unit 70 acquires the position information and the orientation information of the terminal device 60.

[Configuration 1] The calculation unit 90 causes the terminal device 60 to display the state information relating to the state of the operating machine 10 based on the position information of the operating machine 10 acquired by the operating machine information acquisition unit 40 and the position information and the orientation information of the terminal device 60 acquired by the terminal device information acquisition unit 70 (see FIG. 3).

By [Configuration 1], the worker (the surrounding worker W) who is using the terminal device 60 shown in FIG. 1 and who is around the operating machine 10 can acquire the state information of the operating machine 10 from the terminal device 60. Therefore, the surrounding worker W can easily acquire the state information of the operating machine 10. For example, as compared with the case where the state information of the operating machine 10 is displayed on the ground around the operating machine 10, the surrounding worker W can easily acquire the state information of the operating machine 10. Further, since the surrounding worker W can acquire the state information of the operating machine 10 from the terminal device 60, large-scale equipment for displaying the state information of the operating machine 10 (for example, equipment for projecting laser light and the like) does not need to be installed on the operating machine 10. Therefore, equipment that needs to be provided in the operating machine 10 in order for the surrounding workers W to acquire the state information of the operating machine 10 can be reduced in size.

### (Effect of Second Invention)

[Configuration 2] The calculation unit 90 determines the information to be displayed on the terminal device 60 based on the parameter indicating the degree of attention acquired from the state information.

By [Configuration 2], the surrounding worker W can acquire information based on the parameter indicating the degree of attention on the terminal device 60. As a result, an effect below may be obtained. In a case where the parameter indicating the degree of attention is set based on the necessity for attention of the surrounding worker W, information based on the necessity for attention of the surrounding worker W can be displayed on the terminal device 60. As a result, in this case, attention of the surrounding worker W can be appropriately called. Further, in a case where the terminal device 60 is prevented from displaying information that has low necessity for attention of the surrounding worker W, it is possible to prevent the display of the terminal device 60 from interfering with the work of the surrounding worker W.

### (Effect of Third Invention)

[Configuration 3] The calculation unit 90 determines the display information to be displayed on the terminal device 60 based on the information indicating the attention area A (see FIG. 3) which is the area around the operating machine 10.

In [Configuration 3], the calculation unit 90 determines the display information to be displayed on the terminal device 60 based on the attention area A (see FIG. 3). Therefore, the surrounding worker W is allowed to easily acquire the display information based on the attention area A (see FIG. 3).

### (Effect of Fourth Invention)

[Configuration 4] As shown in FIG. 3, the terminal device 60 displays the attention area A so that the attention area A is superimposed on the image captured by the terminal device 60. Alternatively, the terminal device 60 displays the attention area A so that the attention area A is superimposed on the foreground seen by the worker through the terminal device 60.

By [Configuration 4], the surrounding worker W (see FIG. 6, the same applies to the surrounding worker W hereinafter) is allowed to easily grasp the attention area A.

### (Effect of Fifth Invention)

As shown in FIG. 2, the operating machine information display system 1 includes the display switching unit 82. The display switching unit 82 switches between the first display mode and the second display mode, which are modes related to the display of the terminal device 60.

[Configuration 5-1] When the first display mode is selected by the display switching unit 82, as shown in FIG. 3, the terminal device 60 displays the attention area A so that the attention area A is superimposed on the image captured by the terminal device 60. Alternatively, in a case where the first display mode is selected by the display switching unit 82 (see FIG. 2), the terminal device 60 displays the attention area A so that the attention area A is superimposed on the foreground seen by the worker through the terminal device 60.

[Configuration 5-2] In a case where the second display mode is selected by the display switching unit 82 (see FIG. 2), the terminal device 60 hides the attention area A or reduces the information amount of the display of the attention area A as compared with the case where the first display mode is selected.

By [Configuration 5-1], an effect similar to the effect by [Configuration 4] can be obtained. On the other hand, there is a case where the display of the attention area A interferes with the work for the surrounding worker W. In view of the above, in [Configuration 5-2], the attention area A is hidden or the information amount of the display of the attention area A is reduced. Therefore, it is possible to prevent the display of the attention area A from interfering with the work for the surrounding worker W.

### (Effect of Sixth Invention)

[Configuration 6] As shown in FIG. 4, the terminal device 60 displays information relating to whether or not the terminal device 60 exists inside the attention area A.

By [Configuration 6], it is possible to allow the surrounding worker W to easily grasp whether or not the terminal device 60 exists inside the attention area A (whether or not there is the surrounding worker W).

### (Effect of Seventh Invention)

[Configuration 7] In a case of displaying the attention area A, the terminal device 60 changes the display color of the attention area A depending on whether or not the terminal device 60 exists inside the attention area A.

By [Configuration 7], it is possible to allow the surrounding worker W to more easily grasp whether or not the terminal device 60 exists inside the attention area A (whether or not there is the surrounding worker W).

### (Effect of Eighth Invention)

[Configuration 8] The operating machine information acquisition unit 40 shown in FIG. 2 further acquires the orientation information indicating the orientation of the operating machine 10. The calculation unit 90 sets the attention area A based on the orientation information of the operating machine 10.

The area to which the surrounding worker W should pay attention changes depending on the orientation of the operating machine 10 shown in FIG. 7A. In view of the above, in [Configuration 8], the attention area A is set based on the orientation information of the operating machine 10. Therefore, the attention area A can be appropriately set based on the necessity for attention of the surrounding worker W.

### (Effect of Ninth Invention)

[Configuration 9] The operating machine information acquisition unit 40 (see FIG. 2) acquires the operation amount of the operating machine 10. The calculation unit 90 (see FIG. 2) sets the attention area A so that the attention area A becomes wider as the operation amount of the operating machine 10 increases.

As the operation amount of the operating machine 10 increases, the operating speed of the operating machine 10 increases, and the area to which the surrounding worker W should pay attention becomes wider. On the other hand, as the operation amount of the operating machine 10 becomes smaller, the area to which the surrounding worker W should pay attention becomes narrower. In view of the above, in [Configuration 9], the attention area A is set to be wider as the operation amount of the operating machine 10 increases. Therefore, the size of the attention area A can be appropriately set based on the necessity for attention of the surrounding worker W based on the operation amount of the operating machine 10.

### (Effect of Tenth Invention)

[Configuration 10] The operating machine information acquisition unit 40 (see FIG. 2) further acquires the operating speed of the operating machine 10. The calculation unit 90 (see FIG. 2) sets the attention area A so that the attention area A becomes wider as the operating speed of the operating machine 10 increases.

As the operating speed of the operating machine 10 increases, the area to which the surrounding worker W should pay attention becomes wider. On the other hand, as the operating speed of the operating machine 10 becomes lower, the area to which the surrounding worker W should pay attention becomes narrower. In view of the above, in [Configuration 10], the attention area A is set to be wider as the operating speed of the operating machine 10 increases. Therefore, the size of the attention area A can be appropriately set based on the necessity for attention of the surrounding worker W based on the operating speed of the operating machine 10.

### (Effect of Eleventh Invention)

[Configuration 11] The operating machine information acquisition unit 40 (see FIG. 2) further acquires the slewing speed ω of the upper slewing body 23 with respect to the lower travelling body 21 of the operating machine 10. The calculation unit 90 (see FIG. 2) sets the attention area A so that the attention area A1 becomes wider as the slewing speed ω acquired by the operating machine information acquisition unit 40 increases.

By [Configuration 11], the size of the attention area A can be appropriately set based on the necessity for attention of the surrounding worker W based on the slewing speed ω.

### (Effect of Twelfth Invention)

[Configuration 12] The operating machine information acquisition unit 40 (see FIG. 2) further acquires the travelling speed v2 of the operating machine 10 shown in FIG. 8A. The calculation unit 90 (see FIG. 2) sets the attention area A so that the attention area A2 becomes wider as the travelling speed v2 acquired by the operating machine information acquisition unit 40 (see FIG. 2) increases.

By [Configuration 12], the size of the attention area A can be appropriately set based on the necessity for attention of the surrounding worker W based on the travelling speed v2.

### (Effect of Thirteenth Invention)

[Configuration 13] The operating machine information acquisition unit 40 (see FIG. 2) acquires the attachment speed v3, which is the speed of the attachment 30 with respect to the machine main body 20 of the operating machine 10 shown in FIG. 9A. The calculation unit 90 (see FIG. 2) sets the attention area A so that the attention area A3 becomes wider as the attachment speed v3 acquired by the operating machine information acquisition unit 40 (see FIG. 2) increases.

By [Configuration 13], the size of the attention area A can be appropriately set based on the necessity for attention of the surrounding worker W based on the attachment speed v3.

### (Effect of Fourteenth Invention)

[Configuration 14] The operating machine information acquisition unit 40 (see FIG. 2) acquires the posture of the attachment 30 with respect to the machine main body 20 of the operating machine 10 shown in FIG. 10A. The calculation unit 90 (see FIG. 2) changes the size of the attention area A4 based on the posture acquired by the operating machine information acquisition unit 40.

The area to which the surrounding worker W should pay attention changes depending on the posture of the attachment 30. In view of the above, in [Configuration 14], the size of the attention area A4 is changed based on the posture of the attachment 30. Therefore, the size of the attention area A can be appropriately set based on the necessity for attention of the surrounding worker W based on the posture of the attachment 30.

### (Effect of Fifteenth Invention)

[Configuration 15] In a case where the terminal device 60 shown in FIG. 6 displays the attention area A and the calculation unit 90 (see FIG. 2) changes the size of the attention area A, the terminal device 60 changes the display color of the attention area A.

By [Configuration 15], it is possible to allow the surrounding worker W to easily grasp that the size of the attention area A has changed.

### (Effect of Sixteenth Invention)

[Configuration 16] As shown in FIG. 1, the operating machine information display system 1 includes the operator output device 51 configured to be usable by the operator of the operating machine 10. The operator output device 51 displays the position information of the terminal device 60.

According to [Configuration 16], the operator of the operating machine 10 is allowed to easily grasp the position of the terminal device 60 (the position of the surrounding worker W).

### (Effect of Seventeenth Invention)

[Configuration 17] The operating machine information display system 1 includes the operator output device 51 configured to be usable by the operator of the operating machine 10. The operator output device 51 outputs a warning in a case where the terminal device 60 exists inside the attention area A shown in FIG. 6.

By [Configuration 17], the operator of the operating machine 10 is allowed to easily grasp that the terminal device 60 exists inside the attention area A (the surrounding worker W is inside the attention area A).

### (Modification)

The above embodiment may be variously modified. For example, the circuit connections shown in FIG. 2 may be changed. For example, the order of the steps in the flowcharts shown in FIGS. 11A to 11C may be changed, some of the steps may be not performed, or steps in different flowcharts may be combined. For example, the number of constituents of the operating machine information display system 1 may be changed, and some of the constituents may be not provided. For example, what are described as a plurality of constituents different from each other may be regarded as one member or portion. For example, what is described as one member or portion may be divided into a plurality of different members or portions.

For example, the operating machine information acquisition unit 40 may acquire only part of pieces of the information of the operating machine 10. For example, the calculation unit 90 may set the attention area Abased on only part of pieces of the information of the operating machine 10. For example, the terminal device 60 may output only information related to part of the information of the outputs (display and the like) of the terminal device 60. The same applies to the operator output device 51. For example, the terminal device 60 does not have to display the attention area A in a superimposing manner. For example, as shown in FIG. 6, the terminal device 60 may display an image as if the terminal device 60, the attention area A, and the operating machine 10 are viewed from above. For example, the terminal device 60 does not have to display the attention area A.

## Claims

1. An operating machine information display system that displays information on an operating machine, the operating machine information display system comprising:
an operating machine information acquisition unit that acquires information on the operating machine, the information including position information of the operating machine;
a terminal device that is carried by a worker around the operating machine and capable of displaying information; and
a calculation unit,
wherein the terminal device includes a terminal device information acquisition unit that acquires position information and orientation information of the terminal device, and
the calculation unit causes the terminal device to display state information relating to a state of the operating machine based on the position information of the operating machine acquired by the operating machine information acquisition unit and the position information and the orientation information of the terminal device acquired by the terminal device information acquisition unit.

2. The operating machine information display system according to claim 1, wherein the calculation unit determines display information to be displayed on the terminal device based on a parameter indicating degree of attention acquired from the state information.

3. The operating machine information display system according to claim 2, wherein
the parameter indicating the degree of attention includes information indicating an attention area which is an area around the operating machine, and
the calculation unit determines the display information based on the information indicating the attention area.

4. The operating machine information display system according to claim 3, wherein
the terminal device information acquisition unit further acquires the orientation information of the terminal device, and
the terminal device displays the attention area so that the attention area is superimposed on an image captured by the terminal device, or displays the attention area so that the attention area overlaps a foreground seen by the worker through the terminal device by using the orientation information.

5. The operating machine information display system according to claim 3, wherein
the terminal device information acquisition unit further acquires the orientation information of the terminal device,
the operating machine information display system further comprising a display switching unit that switches between a first display mode and a second display mode, which are modes relating to display of the terminal device,
wherein in a case where the first display mode is selected by the display switching unit, the terminal device displays the attention area so that the attention area is superimposed on an image captured by the terminal device or so that the attention area is superimposed on a foreground seen by the worker through the terminal device by using the orientation information, and
in a case where the second display mode is selected by the display switching unit, the terminal device hides the attention area, or reduces an information amount of display of the attention area as compared with a case where the first display mode is selected.

6. The operating machine information display system according to any one of claims 3 to 5, wherein the terminal device displays information relating to whether or not the terminal device exists inside the attention area.

7. The operating machine information display system according to claim 6, wherein in a case of displaying the attention area, the terminal device changes a display color of the attention area depending on whether or not the terminal device exists inside the attention area.

8. The operating machine information display system according to any one of claims 3 to 7, wherein
the operating machine information acquisition unit further acquires orientation information indicating orientation of the operating machine, and
the calculation unit sets the attention area based on the orientation information.

9. The operating machine information display system according to any one of claims 3 to 8, wherein
the operating machine information acquisition unit acquires an operation amount of the operating machine, and
the calculation unit sets the attention area so that the attention area becomes wider as the operation amount of the operating machine increases.

10. The operating machine information display system according to any one of claims 3 to 9, wherein
the operating machine information acquisition unit further acquires an operating speed of the operating machine, and
the calculation unit sets the attention area so that the attention area becomes wider as the operating speed of the operating machine increases.

11. The operating machine information display system according to claim 10, wherein
the operating machine further includes a lower travelling body and an upper slewing body,
the operating machine information acquisition unit further acquires a slewing speed of the upper slewing body with respect to the lower travelling body, and
the calculation unit sets the attention area so that the attention area becomes wider as the slewing speed acquired by the operating machine information acquisition unit increases.

12. The operating machine information display system according to claim 10 or 11, wherein
the operating machine information acquisition unit further acquires a travelling speed of the operating machine, and
the calculation unit sets the attention area so that the attention area becomes wider as the travelling speed acquired by the operating machine information acquisition unit increases.

13. The operating machine information display system according to any one of claims 10 to 12, wherein
the operating machine further includes an operating machine main body and an attachment,
the operating machine information acquisition unit further acquires an attachment speed, which is a speed of the attachment with respect to the machine main body, and
the calculation unit sets the attention area so that the attention area becomes wider as the attachment speed acquired by the operating machine information acquisition unit increases.

14. The operating machine information display system according to any one of claims 9 to 13, wherein
the operating machine further includes an operating machine main body and an attachment,
the operating machine information acquisition unit further acquires posture information indicating a posture of the attachment with respect to the machine main body, and
the calculation unit changes size of the attention area based on the posture information acquired by the operating machine information acquisition unit.

15. The operating machine information display system according to any one of claims 9 to 14, wherein in a case where the terminal device displays the attention area and the calculation unit changes size of the attention area, the terminal device changes a display color of the attention area.

16. The operating machine information display system according to any one of claims 1 to 15, further comprising an operator output device configured to be usable by an operator of the operating machine,
wherein the operator output device displays position information of the terminal device.

17. The operating machine information display system according to any one of claims 3 to 15, further comprising an operator output device configured to be usable by an operator of the operating machine,
wherein the operator output device outputs a warning in a case where the terminal device exists inside the attention area.
